# EUROPEAN PATENT APPLICATION

(11) **EP 0 576 681 A1**
(43) Date of publication of application: **05.01.1994**
(21) Application number: 93901542.6
(22) Date of filing: 12.01.1993
(51) Int. Cl.: G05B 19/403, G05B 19/405

(54) **MACHINING PROGRAM GENERATION METHOD**

(30) Priority: 20.01.1992 JP 7415/92
(71) Applicant: FANUC LTD., Minamitsuru-gun, Yamanashi 401-05 (JP)
(72) Inventor: MATSUMURA, Teruyuki Fanuc Dai-3 Vira-karamatsu, Yamanashi 401-05 (JP); DEGUCHI, Yuuji Fanuc Dai-3 Vira-karamatsu, Yamanashi 401-05 (JP); NAGASHIMA, Noritake Fanuc Mansion Harimoni 8-303, Yamanashi 401-05 (JP)
(74) Representative: Brunner, Michael John
(86) International application number: JP9300034
(87) International publication number: WO9314449

(57) **Abstract**

A machining program generation method capable of easily defining a belt-like shape. An operator first defines a component shape as a center line of a belt-like shape by a shape element key of a keyboard (17) clockwise from a point (1a), for example. A display screen (16a) displays a shape element (2) and a figure of the defined component shape (1) corresponding to the shape element keys. When this component shape (1) is desired to be converted to the belt-like shape, the operator pushes the corresponding instruction key (3a) in a series of keys (3) displayed on the screen. When the operator inputs interactively belt-like shape items for determining the belt-like shape, belt-like shape calculation is carried out inside an interactive numeric controller and the belt-like shape is displayed on the display screen (16a). Thereafter, machining conditions, etc, are inputted, and a machining program of the belt-like shape is generated.

## Description

### TECHNICAL FIELD

The present invention relates to a machining program creation method, and more specifically, to a machining program creation method of creating a band configuration machining program.

### BACKGROUND ART

Interactive type numerical control apparatuses widely employ such a component configuration input method that a component configuration is input by inputting configuration elements through configuration element keys provided on a keyboard. The configuration element keys are defined with horizontal, vertical and oblique lines, arcs, symbols and the like. As a result, even beginners can easily define a machining configuration through a simple operation by selecting the configuration element keys along the configuration of a work piece to be machined.

Incidentally, in conventional interactive type numerical control apparatuses, a contour line for machining an inside pocket portion and a contour line for machining an outside contour must be input to define a band configuration.

Nevertheless, there may be a case in which a drawing only shows the center line and band width of a band configuration. In this case, a problem arises in that an operator must calculate and input the shapes of the inside and outside contour lines of the band configuration based on the center line and band width thereof.

In the same way, there may be a case in which a drawing only shows the inside shape and width of a band configuration. Even in this case, the operator must calculate and input the shape of the outside counter line of the band configuration based on the inside shape and width of the band configuration. Conversely, there may be a case in which a drawing only shows the outside shape and width of a band configuration. Also, in this case, a problem arises in that the operator must calculate and input the shape of the inside contour line of the band configuration based on the outside shape and width of the band configuration.

### DISCLOSURE OF THE INVENTION

Taking the above into consideration, an object of the present invention is to provide a machining program creation method capable of easily defining a band configuration.

To solve the above problem, according to the present invention, there is provided a machining program creation method of creating a band configuration machining program, which comprises the step of inputting a component configuration and band configuration items to thereby create the band configuration machining program from the component configuration and the band configuration items.

First, an operator inputs configuration elements by using configuration element keys provided on a keyboard to define the component configuration. Thereafter, a band width, band height and the like, for example, are input as band configuration items. The band configuration machining program is created from these input component configuration and band configuration items.

### BRIEF DESCRIPTION OF THE DRAWINGS

Figure 1 is a diagram showing an example of a screen displaying a definition of configuration;
Figure 2 is a block diagram showing the arrangement of an interactive type numerical control apparatus;
Figure 3 is a diagram showing an example of a screen displaying input items for a band configuration;
Figure 4 is a diagram showing an example of a screen displaying a band configuration by simulation;
Figure 5 is a diagram showing a band configuration having been machined; and
Figure 6 is a flowchart showing a process for creating a band configuration.

### BEST MODE OF CARRYING OUT THE INVENTION

An embodiment of the present invention will be described below with reference to drawings.

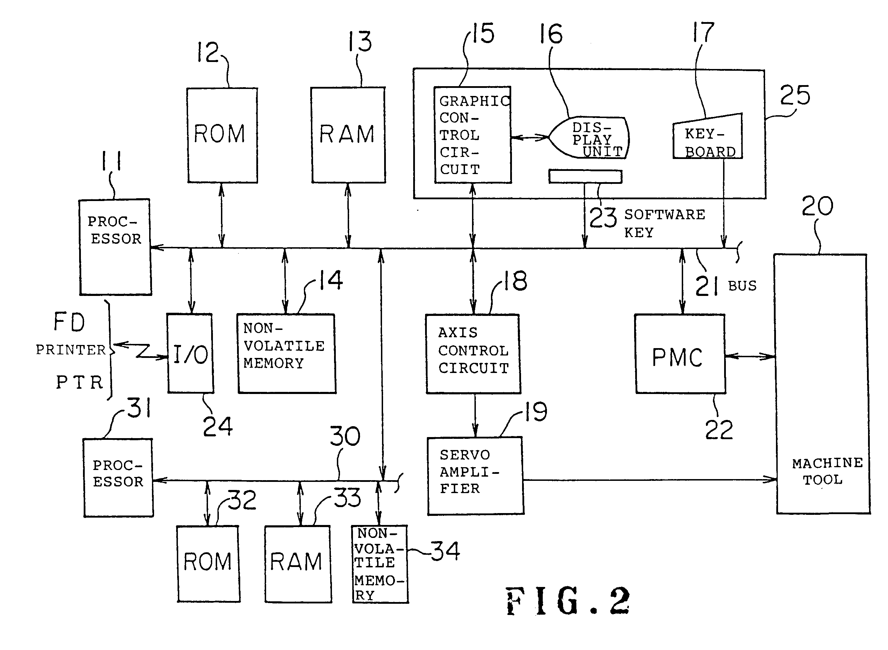

Figure 2 is a block diagram showing the arrangement of an interactive type numerical control apparatus embodying a machining program creation method of the present invention.

A processor (CPU) 11 controls the numerical control apparatus as a whole in accordance with a system program stored in a ROM 12, which is composed of an EPROM or EEPROM. A RAM 13 is composed of an SRAM or the like, in which various data or I/O signals are stored. A non-volatile memory 14 is composed of a CMOS which stores component configurations, parameters, amounts of pitch error correction and tool correction, and the like, and these data are maintained even after a power supply to the numerical control apparatus is cut off, because the CMOS is supplied with power from a not shown battery.

A graphic control circuit 15 converts digital signals into signals for display, and supplies these signals to a display unit 16. A CRT or liquid crystal display is used for the display unit 16. When a machining program is created in an interactive mode, the display unit 16 displays configurations, machining conditions and the like.

A keyboard 17 is composed of configuration element keys, numerical keys and the like, and necessary graphic data and machining data are input through these keys.

An axis control circuit 18 receives an axis movement command from the processor 11 and outputs the axis command to a servo amplifier 19. The servo amplifier 19 receives the axis command and drives the servo motors of a machine tool 20. These constituting elements are interconnected through a bus 21.

When a machining program is executed, a programmable machine controller (PMC) 22 receives a T function signal (tool selection command) and the like through the bus 21. Then, this signal is processed by a sequence program and a signal is output as an operation signal to control the machine tool 20. Further, the PMC 22 receives and sequentially processes a state signal from the machine tool 20 and transfers a necessary input signal to the processor 11 through the bus 21.

Further, the bus 21 is connected to a software key 23, the function of which is changed by the system program and the like, and to a serial interface 24 for supplying a machining data to a floppy disk unit (FDD), printer, paper tape reader (PTR) or the like. The software key 23 is provided on a CRT/MDI panel 25 together with the display unit 16 and keyboard 17.

The bus 21 is connected to an interactive processor (CPU) 31 having a bus 30 in addition to the processor 11 serving as a machining CPU. The bus 30 is connected to a ROM 32, RAM 33 and non-volatile memory 34.

Screens for displaying input interactive type data on the display unit 16 are stored in the ROM 32. Further, the ROM 32 also stores a processing program for creating band configuration machining programs. When a machining program is created, the moving locus of a tool as a whole, and the like are displayed as a background animation on the screen to which the interactive type data is input. Further, jobs or data which can be set by the screens input to the display unit 16 are displayed thereon as a menu. An item of menus to be selected is input through the software key 23 disposed at the lower portion of the screen in correspondence to the menu. The RAM 33 is composed of an SRAM or the like and stores various data for interaction.

Input data is processed by the interactive processor 31 to create a machining program. Created machining program data is sequentially displayed on the display unit 16 used in an interactive mode as a background animation. Further, when the machining operation of the machine tool 20 is simulated, the machining program stored in the non-volatile memory 34 is also executed and displayed as a foreground animation. Note, a program creation unit is a function realized when the processor 31 executes the processing program stored in the ROM 32 to create a band configuration machining program.

A process for creating a band configuration machining program according to the present invention will be described below.

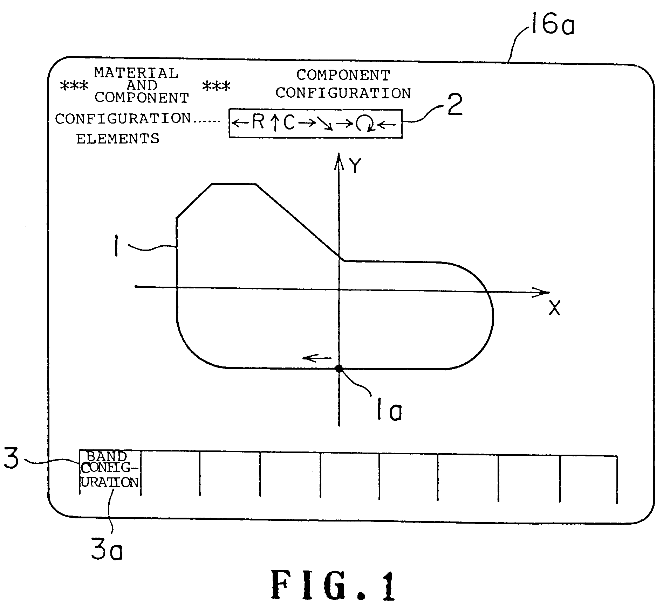

Figure 1 is a diagram showing an example of a screen displaying a definition of configuration, wherein a display screen 16a is a screen to be displayed on the display unit 16 shown in Figure 2. Configuration elements 2 are arranged by representing configuration elements constituting a component configuration 1 by symbols and displayed on the display screen 16a. A software key 3 corresponds to a command key to be commanded by depressing the software key 23 provided on the CRT/MDI panel 25 and is composed of 9 keys which change in accordance with a content to be processed. Figure 1 shows a band configuration command key 3a for commanding the band configuration of a component.

When an operator inputs a component configuration through the configuration element keys on the keyboard 17, the component configuration input to the configuration elements 2 is displayed. At the same time, a figure such as line segments and the like corresponding to the input component configuration is also displayed by simulation. The component configuration 1 is defined by inputting predetermined configuration element keys from a point 1a clockwise. The operator inputs a target component configuration in an interactive mode as described above. Note, the input configuration may be modified, when necessary.

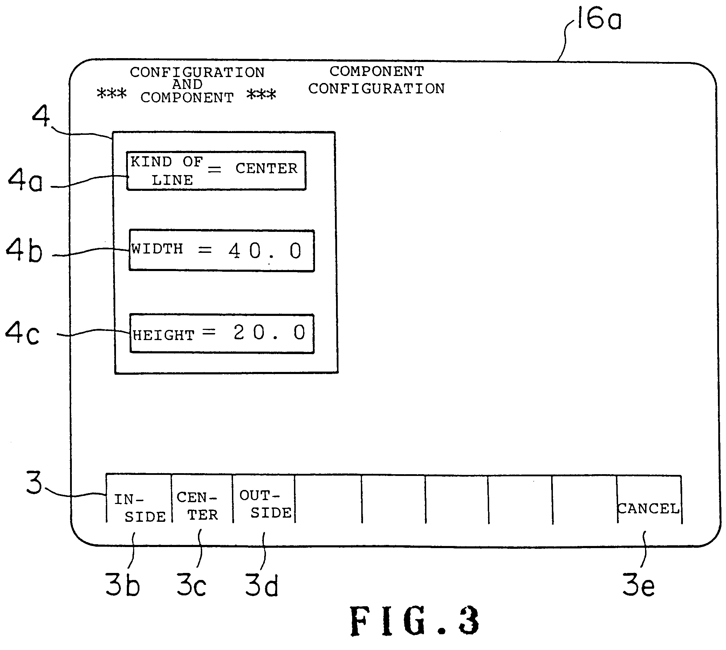

When the operator desires to form the input component configuration 1 to a band configuration, he depresses the band configuration command key 3a of the software key 3. At this time, the display screen 16a changes to Figure 3.

Figure 3 is a diagram showing an example of a screen displaying input items for a band configuration, wherein the same numerals as used in Figure 1 are used to designate the same elements and the description thereof is omitted. Note, command keys corresponding to an inside command key 3b, a center line command key 3c, an outside command key 3d and a cancel command key 3e in the software key 3 are used by changing the contents of the command keys located at the same positions in Figure 1.

The inside command key 3b is used to command that the component configuration 1 defined in Figure 1 is the inside contour line of a band configuration; the center line command key 3c is used to command that the component configuration 1 is the center line of the band configuration; the outside command key 3d is used to command that the component configuration 1 is the outside contour line of the band configuration; and the cancel command key 3e is used to cancel the formation of the component configuration 1 as the band configuration.

When the command key for forming the component configuration 1 to the band configuration, the operator is prompted to input data to a band configuration item 4. The band configuration item 4 includes a kind of line 4a, a band width 4b and a height 4c. The operator must depress any of the inside command key 3b, center line command key 3c and outside command key 3d with respect to the kind of line 4a. Figure 3 shows an example that the operator depresses the center line command key 3c to use the kind of line 4a as the center line of a band configuration. Further, the operator must input predetermined values with respect to the band width 4b and the height 4c through the numerical keys provided on the keyboard 17 shown in Figure 2. Figure 3 shows an example that the operator inputs a value 40.0 [mm] to the band width 4b and a value 20.0 [mm] to the height 4c, respectively. Note, when a positive value is input to the height 4c, an "island" configuration obtained by remaining the portion of the defined band configuration without cutting the same is fixed, and when a negative value is input to the height 4c, a "groove" configuration obtained by cutting off the portion of the defined band configuration is fixed.

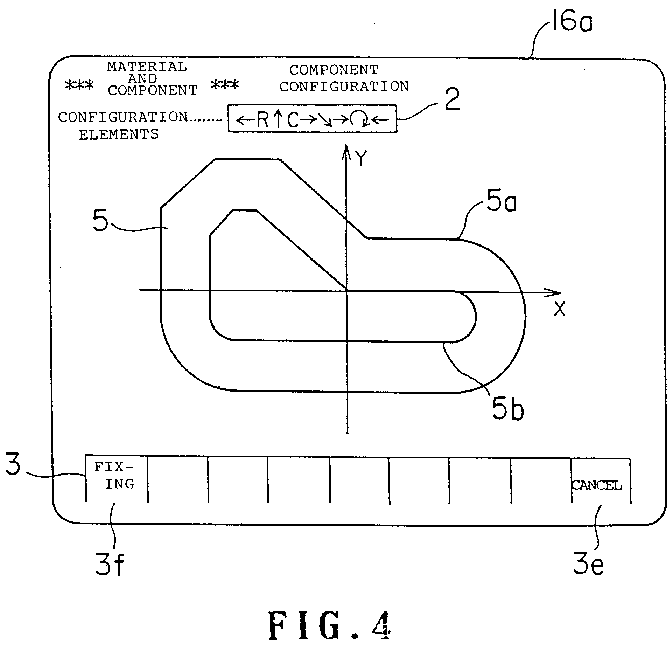

When data is input to the band configuration item 4, the band configuration is fixed and the screen is changed to Figure 4. Figure 4 is a diagram showing an example of the screen displaying the band configuration by simulation. In Figure 4, the same numerals as used in Figure 3 are used to designate the same elements and the description thereof is omitted. Note, a command key corresponding to a fixing command key 3f in the software key 3 is used by changing the content of the command key located at the same position in Figure 3.

At this time, the display screen 16a displays a band configuration 5 according to the band configuration item 4 defined in Figure 3 in place of the component configuration 1 defined in Figure 1. The band configuration 5 is composed of an outside contour line 5a and an inside contour line 5b and has a band width of 40.0 [mm].

Then, when the operator intends to fix the band configuration 5, he depresses the fixing command key 3f, and when he intends to cancel the band configuration 5, he depresses the cancel command key 3e. If the operator depresses the fixing command key 3f and inputs predetermined machining conditions, the program creation unit creates a machining program of the band configuration 5.

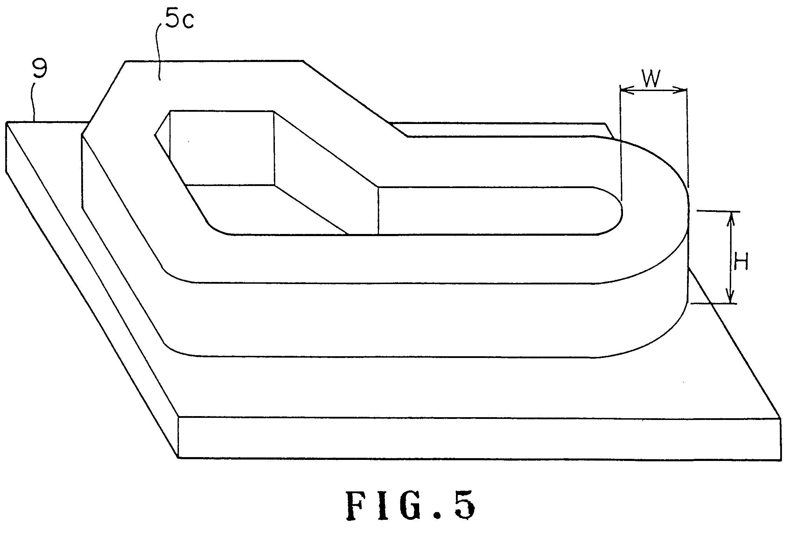

Figure 5 shows the band configuration having been machined by the machining program, in which an island configuration 5c is obtained by machining a work piece 9 by the machine tool 20 shown in Figure 2 in accordance with the band configuration 5 shown in Figure 4. Further, the size (value) of the band width W corresponds to the value defined by the band width 4b of the band configuration item 4 in Figure 3. The size (value) of the height H corresponds to the value defined by the height 4c of the band configuration item 4.

As apparent from Figure 5, the inside pocket and outside contour of the band configuration are machined based on the component configuration 1 defined in Figure 1 and the band configuration item 4 defined in Figure 3. Therefore, the operator can create and machine a desired band configuration in a short time. Note, the present invention is particularly effective to create a machining program for a band configuration of characters including alphanumeric characters.

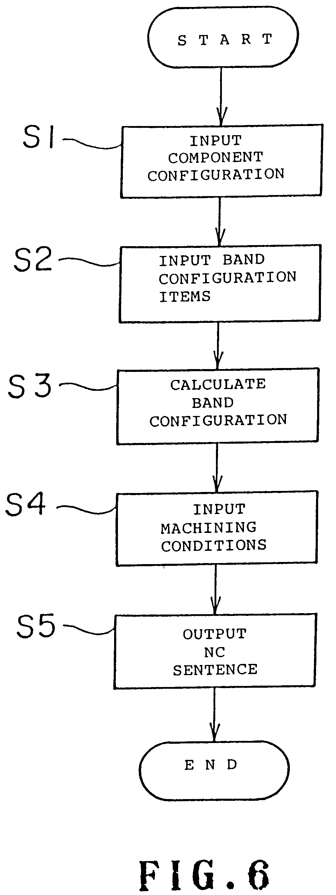

Figure 6 is a flowchart showing a process for creating a band configuration, wherein numerals prefixed with an "S" indicates the numbers of steps of the process.
[S1] A component configuration is input. That is, line segments serving as the base of a band configuration such as the component configuration 1 shown in Figure 1 are input by using the configuration element keys provided on the keyboard 17 shown in Figure 2.
[S2] Band configuration items are input. Specifically, data is input to the band configuration item 4 shown in Figure 3 in an interactive mode. The shape of the band configuration is fixed by this input.
[S3] The band configuration is calculated in the interactive type numerical control apparatus based on the component configuration at step S1 and the band configuration items at step S2.
[S4] Machining conditions, i.e., conditions for machining the band configuration calculated at step S3 are input. Specifically, machining conditions such as a tool selection, cutting condition, r.p.m of a spindle, feed rate and the like are input.
[S5] A machining program (NC sentence) is output based on the calculation of the band configuration executed at step S3 and the machining conditions input at step S4. With this arrangement, machining can be executed by the machine tool 20 shown in Figure 2.

Although the present invention is applied to the interactive type numerical control apparatus in the above description, it may also be applied to an interactive type program creation apparatus in the same way.

Further, although a component configuration is defined by being input through the configuration element keys of the keyboard 17, it may be defined by supplying a command to other input means such as, for example, a command key referred to as an "icon" for graphically displaying configuration elements on the display screen 16a through a pointing device such as a mouse or the like.

As described above, since the present invention creates a band configuration machining program based on a component configuration input from the keyboard provided with the configuration element keys and data input to the band configuration item in an interactive mode by an operator, a band configuration can be easily defined to create a machining program.

## Claims

1. A machining program creation method of creating a band configuration machining program, comprising the step of inputting a component configuration and band configuration items to thereby create the band configuration machining program from said component configuration and said band configuration items.

2. A machining program creation method according to claim 1, wherein said component configuration is input as the center line of a band configuration.

3. A machining program creation method according to claim 1, wherein said component configuration is input as the inside contour line of a band configuration.

4. A machining program creation method according to claim 1, wherein said component configuration is input as the outside contour line of a band configuration.

5. A machining program creation method according to claim 1, wherein a band width and height are input as said band configuration items, and when said band configuration has an island shape, said height is input as a positive value, and when said band configuration has a groove shape, it is input as a negative value.
